# EUROPEAN PATENT APPLICATION

(11) **EP 2 471 372 A1**
(43) Date of publication of application: **04.07.2012**
(21) Application number: 10197183.6
(22) Date of filing: 28.12.2010
(51) Int. Cl.: A21B 3/02, F24C 15/02

(54) **Vacuum cabinet and a door for a vacuum cabinet**

(71) Applicant: Bakkersland IP B.V., 5321 JV Hedel (NL); FRI-JADO B.V., 4878 AA Etten-Leur (NL)
(72) Inventor: Van Boven, Patrick, 4878 AA, Etten-Leur (NL)
(74) Representative: Prins, Hendrik Willem

(57) **Abstract**

The present invention relates to a vacuum cabinet, comprising a door connected by hinge means to a vacuum chamber for closing at least one chamber opening, which door comprises at least one window, wherein the window is connected by moving means to a door frame and the vacuum cabinet further comprises means for sealing the door over the chamber opening, and means for connecting the cabinet to a vacuum source, optionally means for heating the vacuum chamber, and to a door therefore.

## Description

The present invention relates to a vacuum cabinet and to a door for a vacuum cabinet. A vacuum cabinet is a space or a room in which (temporarily) a vacuum is generated in order to allow a particular operation to take place, or to store (temporarily) particular goods under vacuum conditions. Such space or room should be easily accessible via a closable door, which in its closed position would allow to generate and to maintain a vacuum within the room or space. In addition, it is required that the interior of the vacuum cabinet can be monitored so that the goods in the vacuum cabinet and/or the progress of the operation taking place in the vacuum cabinet can be inspected. Such as vacuum cabinet is of particular use for baking food products under the combination of baking and vacuum conditions. Then it is obviously desired to have constant visibility of the goods during baking. This is not only applicable the operators of the vacuum baking oven, but also that customers in a retail store observing the baking of goods in the bakery department forming an attractive selling option.

The present invention relates thus to a particular vacuum cabinet, of which the vacuum space or room is to be accessible via a door comprising at least one window and comprising sealing means for sealing the door over an opening in the vacuum chamber onto the vacuum chamber.

The window normally being made of a transparent material, such as glass or plastic, and is to withstand the forces generated by the pressure difference over the window and thus between the vacuated space or room and the outside surroundings where operation persons and customers may reside. This is the more true when the window is exposed at one side to baking conditions, such as 190°C to 260°C, and at the outside ambient temperature. When the door is in the closed position, the window should be in a reliable and repeatable manner in sealing contact with the vacuum space or room, so that when vacuum is generated, the vacuum room or space is effectively sealed from the surroundings.

However, when a door is closed or opened, then the door rotates to and fro the vacuum space or room around hinge means. During such rotation around a stationary hinge axis, the door with the window will not at the same time make contact with the vacuum space or room over the entire sealing contact extending over a door part or preferably over the circumference of the window. Instead the window will progressively make contact starting at the window side proximal the high means up to the distal window side and there by rolling make contact with the vacuum chamber. Such rolling of the window onto a stationary contact surface will generate bending stress into the window and may ultimately result in a failure of the window when vacuum is generated.

In the past, hinge means had been developed whereby the door is first rotated at some distance in front of the vacuum space or door and then with a secondary lineary movement approaches the vacuum space or room and then makes contact over the entire contact surface. Such hinge means and lineary movement means are relatively complex and expensive.

Accordingly the present invention has for its object to provide a vacuum cabinet and closing a vacuum or room which can be closed by a door provided with at least one window using traditional hinge means having a stationary hinge axis. This is accomplished with vacuum cabinet according to the invention, comprising a door connected by hinge means to a vacuum chamber for closing at least one chamber opening, which door comprises at least one window, wherein the window is connected by moving means to a door frame and the door has means for sealing the door over the chamber opening, and means for connecting the cabinet to a vacuum source, optionally means for heating the vacuum chamber.

The present invention is based on the insight, that by connecting the window to the door frame carrying the window via moving means, the door and preferably the window will be in a position to adjust its non parallel position with the stationary vacuum chamber and move towards a more parallel position when making contact with the vacuum chamber. First contact is at a door or window location which is proximal to the hinge means and subsequent contact at more distal locations of the door or window relative to the hinge means when the door rotates over the hinge means onto the chamber opening. The allowed adjustment of the position of the door or the window relative to the vacuum chamber minimizes bending stress in the window and allows to an optimal contact. Accordingly, traditional and reliable hinge means can be used whereas the window is safely and substantially without generating stress on the window brought into a sealing position in the chamber opening. The required moving of the window while closing the door by rotation is relatively small so that the required moving means may be simple and relatively inexpensive.

Although various moving means may be used in order to compensate for the changing difference in between the door or the window and the chamber opening while closing the door, it is preferred that the moving means comprise rotation means via which the window is connected to the door frame, although preferably the window is carried by a window frame and via the window frame and rotation means connected to the door frame. Such rotation means may comprise a pin over which another element fitted on the pin is allowed to rotate. Such rotation means are very simple in construction, very reliable and easily to adjust to the stress and load that might occur when closing the door and sealing the window on the chamber opening. Other types of possible moving means comprise spring means allowing a movement by the window in the window frame when the the window contact the vacuum chamber.

If according to a preferred embodiment the window rotation means are releasable connected to the door frame, then the window enclosed and carried by its window frame may be easily taken out of the door frame, so that the window may be easily exchanged for another window when it is under repair or damaged by improper handling. In this way the window inclusive the window carrying frame can be mounted and demounted at the same time using the same releasable connection means incorporated into the moving means.

Various constructions may be used for enclosing and carrying the window by the window frame. However, it is preferred that the window is enclosed by a strap connected to the window frame, and the strap has a rubber elastic strap part to be sealingly contacted with the vacuum chamber. Such a strap may be applied to the circumferential edge of the window in a relatively simple manner so that the strap is connected and pressed onto the circumferential edge of the window under tension either by its own material properties or by additional means generating a tension in the strap when mounted on the window edge. It is preferred that the strap is comprising at least a rubber elastic part, so that the strap may be used for sealing the window on the chamber opening. Obviously, it is most preferred if not only the strap part but also the other parts of the strap or the entire strap are/is made of rubber elastic material. Instead of mounting the strap onto the edge of the window via tension it is also possible to apply the strap onto the window and by adhesive or by vulcanization the strap is adhered in a secured manner to either the circumferential edge or lateral part the of the window.

When the door is closed and the window via the rubber elastic strap part contacts and seals onto the vacuum chamber, it is preferred that the sealing is further improved, when the moving means comprise displacement means allowing under vacuum the door part to approach the vacuum chamber thereby increasing and improving the sealing contact. Preferably, the displacement means allow the window under the vacuum to approach the vacuum chamber. Such movement towards the vacuum chamber due to a pressure difference over the window is possible according to a preferred embodiment, wherein the moving means comprise displacement means allowing a door part a displacement towards the chamber opening. Preferably, the window strap is connected to the window frame via the displacement means allowing the window frame to displace in the window frame. The displacement towards the window frame and thereby improving the contact with the vacuum chamber is possible in a reliable manner when the window strap is connected to the window frame via displacement means allowing the window frame to displace in the window frame. Accordingly, it is preferred that the displacement means comprise at least one blade extending through a slot in the window frame and connected to the strap, preferably by extending into a groove formed in the strap. Practically a plurality of blades is used for connecting the window over substantially its entire circumference to the window frame using the displacement means of the invention. It will be apparent to the skilled person that when the pressure difference is relieved over the window, that the displacement means allow for a movement reverse to the movement when the vacuum was applied. In order to have the window via its sealing means always in a position which is instantly making contact with the chamber opening, the window frame comprises springs means for urging the window towards the vacuum chamber.

Generally a door with one window connected by moving means to the door frame may used for sealing the door onto the chamber opening. In addition is it possible that the windows sealingly close off two or more chamber openings. However, otherwise it may be preferred to use more than one window for sealing of the door on one or more chamber openings. Obviously one window may be used for sealing of two or more chamber openings. However, the larger the window, the larger the strength required by the window to withstand the pressure difference (and temperature differences) over the window. Such required increased strength is coupled to thicker windows or window materials of higher strength, both options at higher costs. Accordingly, it is possible to use a window for two or more chamber openings. However, it is preferred to use one window for one chamber opening. Then, relatively small windows can be used although inspection via the chamber opening is still possible. The windows may be relatively thin and possibly of less strenght imparting material.

During use, improper handling of the door, or undesired impacts on the window may result in an undesired failure of the window when the vacuum cabinet is under vacuum (and heated). In order allow a save operation of the vacuum cabinet, it is therefore preferred that the door is provided with an outer cover window for each window, for two or more windows or all windows. Such outer cover or safety window will largely moderate the effects of window failure allowing safe use of the vacuum cabinet at places such as a retail location or baking department with people in the direct surroundings. In this respect it is further preferred when the cover window is mounted on a support plate having openings which register with the windows and chamber openings, so that the view onto the chamber opening is substantially not hindered by the support plate. Still, the cover window is, due to the supporting plate is now subjected to relatively small stresses and constraints during vacuum due to the supporting effect minimizing a bending of the window. This means that the thickness of the window may be reduced which has also a positive effect of the production costs of the vacuum cabinet.

Since the window may be subjected to improper use and handling and undesired impacts, this may result in an implosion when the vacuum cabinet is under vacuum. In order to allow an instantaneous ingress of air from the outside into the vacuum cabinet thereby leveling the pressure difference and thus the effects of the implosion and subsequent expel of (hot) air and window remnants, it is preferred that the door is at least at its upper region provided with a ventilation opening. Accordingly, when implosion occurs air is instantly supplied thereby reducing the implosion damage. Furthermore, when the vacuum cabinet is used as a vacuum baking oven the ventilation opening allows for the release of hot air during the baking period.

Generally goods may be placed in the vacuum cabinet and oven from a trolley that transports the goods towards the vacuum cabinet. Such trolley may contact with the door in the opened position contact the side of the window facing the cabinet and also the sealing means and the like. Such (frequent) contact may result in damage. Such damage may be substantially reduced or even avoided if the door is provided with a safety bar.

When the vacuum cabinet is used as a vacuum baking oven then cabinet is provided with means for not only connecting to a (remote) vacuum source but also with heating means. If the vacuum baking oven is to be used for vacuum baking and cooling then the vacuum cabinet is also provided with connections to a steam source, such as a boiler. When using steam baking and/or cooling then it is preferred that steam supply is controlled interactively. Such as a compensation for the generation of steam by the goods under baking conditions, or the reduction in steam due to condensation on relatively cold goods present in the vacuum cabinet. Accordingly, it is preferred that measurement of the steam pressure in the vacuum oven is by the control means allows for a reliable control of the presence and supply steam into the vacuum cabinet. Such control is by a control of the steam pressure in the vacuum baking over. Obviously, such the control of the steam supply by measuring the steam pressure in the vacuum chamber may be used independently of the moving means of the invention incorporated in the door of the vacuum cabinet of the invention.

Another aspect of the invention relates to a door for a vacuum cabinet as described above.

Mentioned and other advantages of the vacuum cabinet and door for a vacuum cabinet will be further explained, described and illustrated with reference to several embodiments which will be given for illustrative purposes only and not indented to limit the invention to any extent. The embodiments will be described with reference to annexed drawings, wherein:
Figure 1: a partial perspective view of a vacuum cabinet according to the invention;
Figure 2: a perspective view of the vacuum cabinet of figure 1 with opened door according to the invention;
Figure 3: top views according to arrow III in figure 2 of the closing operation of the door;
Figure 4: in perspective a view according to arrow IV in figure 2;
Figure 5: cross sections over the line V-V in figure 2 with the door in various positions: A: door open; B: door closed; C: vacuum application;
Figure 6: is at a larger scale detail VI in figure 5;
Figure 7: at a larger scale detail VII in figure 4;
Figure 8: the rotation means after removal of the window with its window frame; and
Figure 9: perspective and cross sectional view of the opened door.

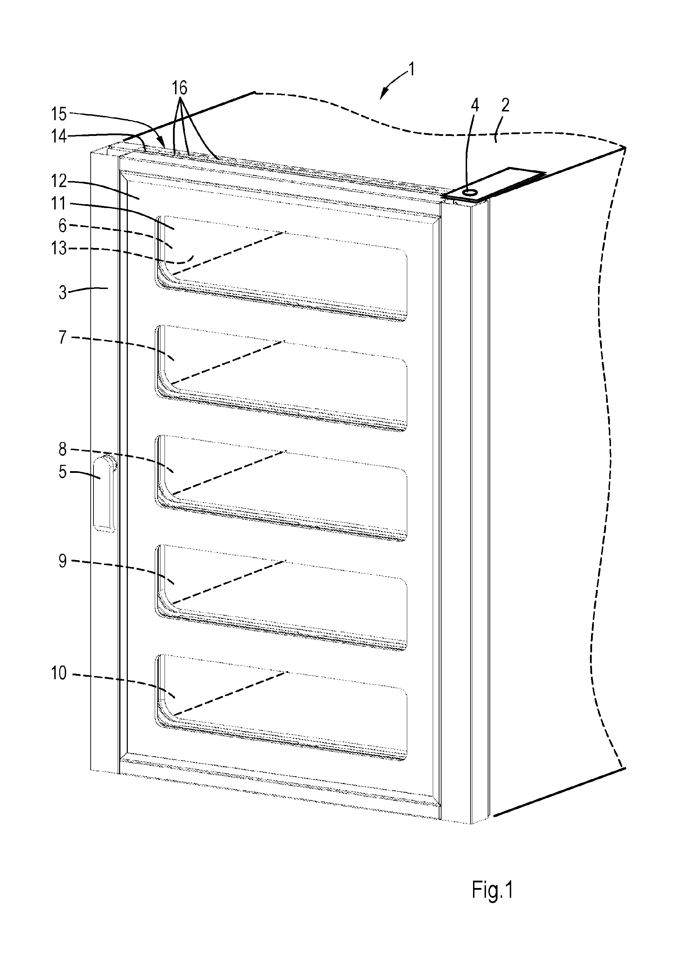

Figure 1 shows a vacuum cabinet 1 according to the invention. The vacuum cabinet 1 comprises a vacuum chamber 2 which is closed by a door 3. The door 3 is connected to the vacuum chamber 2 via hinge means 4. The door 3 is closed onto the vacuum chamber 2 via a handle 5. The vacuum cabinet is a vacuum baking oven 1 provided with heating means, and connections to a source for vacuum and (optionally) steam means, such as a boiler. The vacuum and steam means may if so desired be placed at a remote place thereby saving ground place.

The door 3 comprises five windows 6-10 covered by a cover window 11 supported by a support plate 12. Accordingly it is possible via the windows 6-10 to look into the interior 13 of the vacuum chamber 2. The door 3 is at its upper side 14 provided with a ventilation 15 by means of several ventilation openings 16 communicating with the interior 13 of the vacuum chamber. Accordingly, differences in pressure due heating or cooling of the interior of the vacuum chamber can be compensated for and relieved, as well as sudden pressure changes due to window failure followed by an implosion.

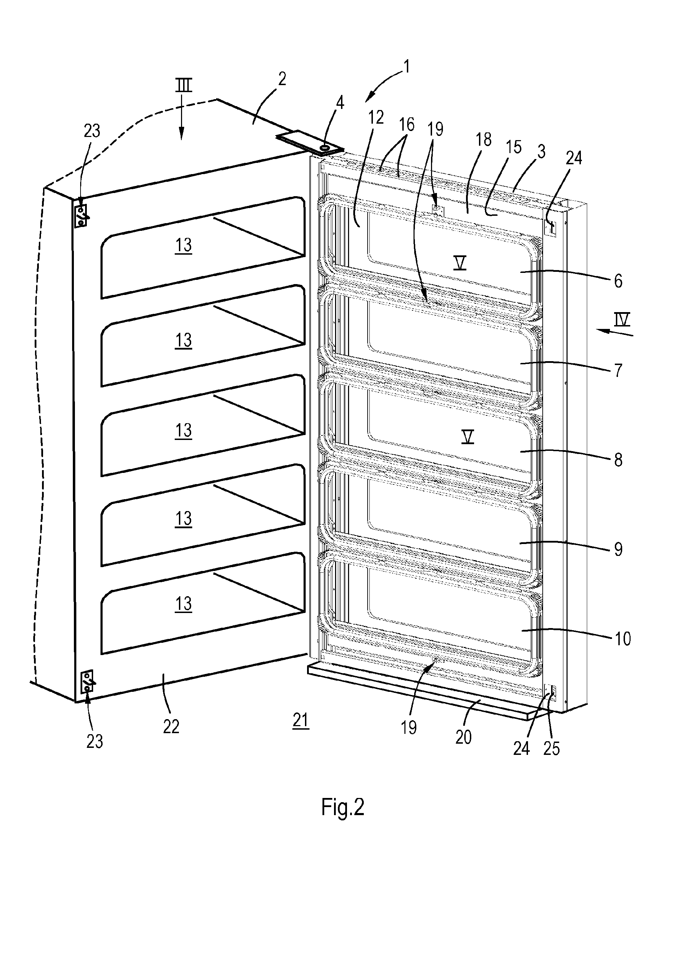

Figure 2 shows the vacuum cabinet according to the invention with the door 3 in the opened position so that access is available to the interior 13 of the vacuum chamber 2. The windows 6-10 are mounted in and carried by a window frame 17 and connected to the door frame 18 of the door 3 via moving means 19. The moving means 19 are arranged in between the window frame 17 and the door frame 18 at both the upper side and lower side of the window or window frame 17. The moving means 19 allow for a rotation over an axis extending through the moving means 19 which is in the plane of the drawing.

The door 3 is at its lower side provided with a safety bar 20 protecting the inner side of the door 3 against undesired contact with trolleys or other vehicles present on the floor 21.

The wall 22 of the vacuum chamber 2 is provided with closure means 23 which extend via an opening 24 into the door 3 (with the door 3 closed) through which opening 24 they cooperate with a closure member 25 actuated with the handle 5 and locking in the closure means 23. The closure means 23 may be provided with adjustment means such that the distance between the door 3 and the wall 22 may be adjusted when needed.

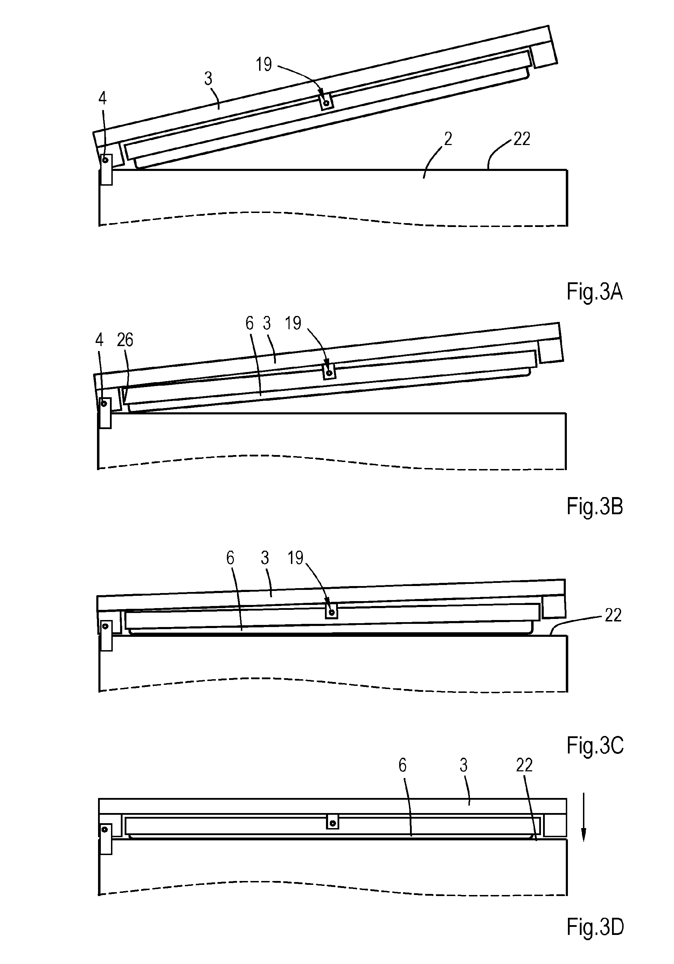

Figure 3 shows the closing of the door 3 onto the vacuum chamber 2, while the door 3 rotates over the hinge means 4 (see figure 3A). In the position shown in figure 3B, the door 3 starts to close the opening 24 and contacts the wall 22 at the proximal side 26 of the window 6 were it touches the wall 22. Further closing the door 2 will result in a rotation of the window 6 as allowed by the moving means 19. The window intends to take a planar position relative to the position stationary wall 22, but the relative position changes constantly during the closing (and opening) procedure. By the window rotation the stress impact of the reduction of the distance and clearance of the window 6 at different locations of the window 6 is reduced or substantially avoided, when approaching the wall 22 (see figure 3C). Finally the door is in its closed position (figure 3D) in which the window 6 is in a coplanar position relative to the wall 22. The door 3 is sealed on the wall 22 and vacuum may be applied.

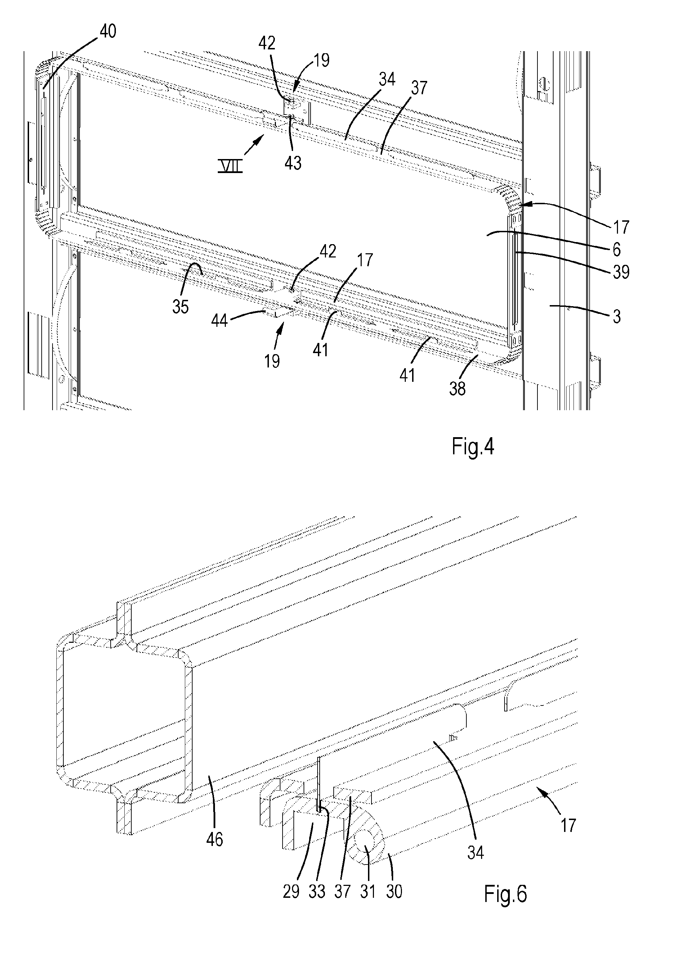

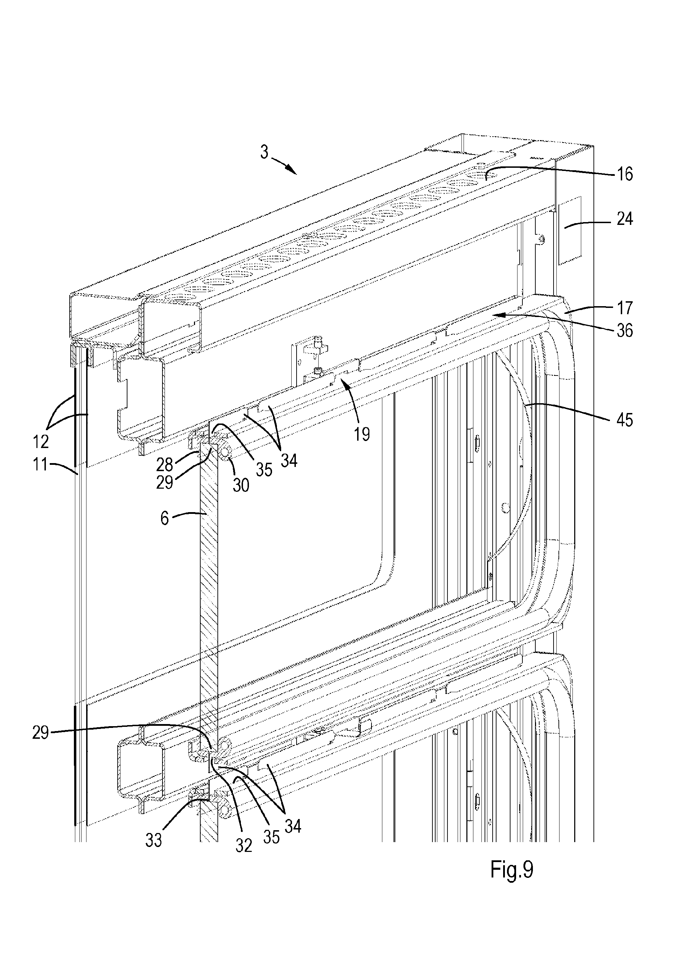

Figures 4 and 9 show more in detail the manner in which the window 6 is mounted in its window frame 17 connected to the door frame 18. The window 6 is provided over its entire outer circumferential edge with a strap 28. The strap 28 is made of made of rubber elastic material. The strap 28 is elongated when applying onto the edge of the window 6 and is under tension fitted in a cavity 29. In addition, or in the alternative the strap 28 may be adhered to the window 6 by adhesive or vulcanization. In the latter embodiments, the strap 28 may also be applied to the lateral circumference of the window surface. The strap 28 is further provided with a rubber elastic strap part 30 having a hollow channel 31. This allows for a resilient contact with the wall 22 when the vacuum chamber 2 is under vacuum. At the outer surface 32 the strap 28 is provided with a groove 33 in which extends a blade 34. The blade 34 (comprised by displacement means 36) is in inserted in a wide slot 35 of the window frame 17. The blade 34 extending through the slot 35 is an embodiment of the displacement means 36 which allows a displacement of the window 6 in a direction across the wide slot 35. Accordingly, the window 6 with the rubber elastic strap part 30 can move towards the wall 22 independent of the door 3. This allows for an additional reliable sealing of the part 30 onto the wall 22. The reverse displacement occurs when the vacuum is relieved.

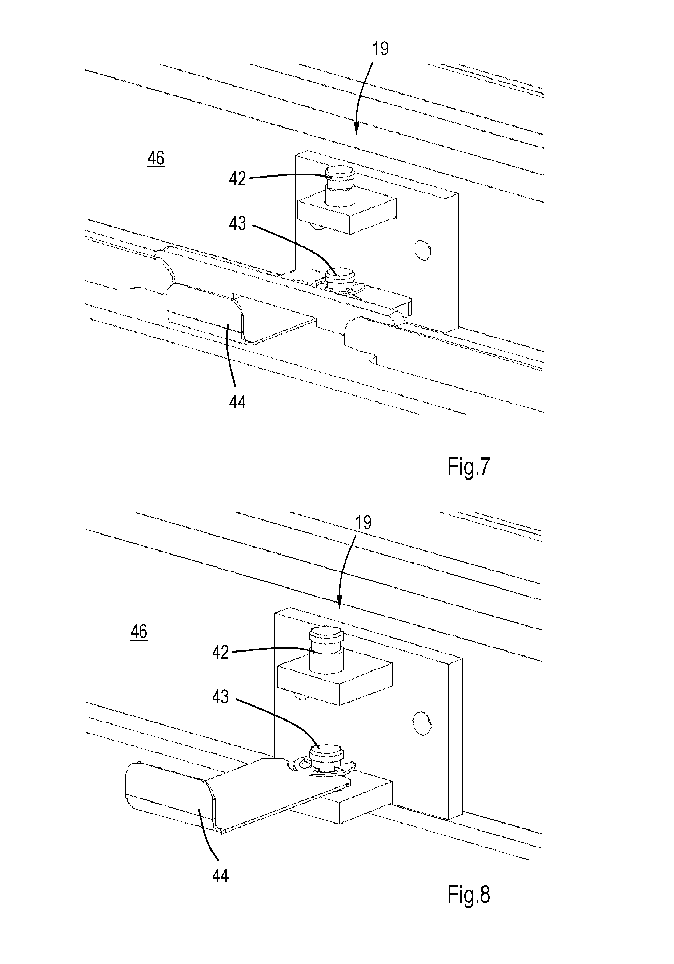

Figure 4 shows further that the window frame 17 may be formed by two strips 37 and 38 connected by connection strips 39 and 40, so that the window frame 17 is formed by four frame element 37-40. However, it is possible to construct a window frame 17 comprising two or only one frame element. Still the window frame 17 is provided with slots 35 into which extend blades 34 which with a notch 41 extend into the groove 33 of the strap 28. The moving means 19 are shown further in detail in figure 7. Figure 7 shows that the moving means 19 comprise a pin 42 that is connected to a bar 43 of the door 3. The window frame 17 is hooked on the pins 42 and 43. The window frame 17 is locked into the hooked position with a locking element 44. Accordingly the window frame 17 may move and in particular rotate over the pins 42 and 43. Still the window frame 17 with its window 6 may be easily released and replaced by another frame 17 carrying another window 6 when repair or maintenance so requires.

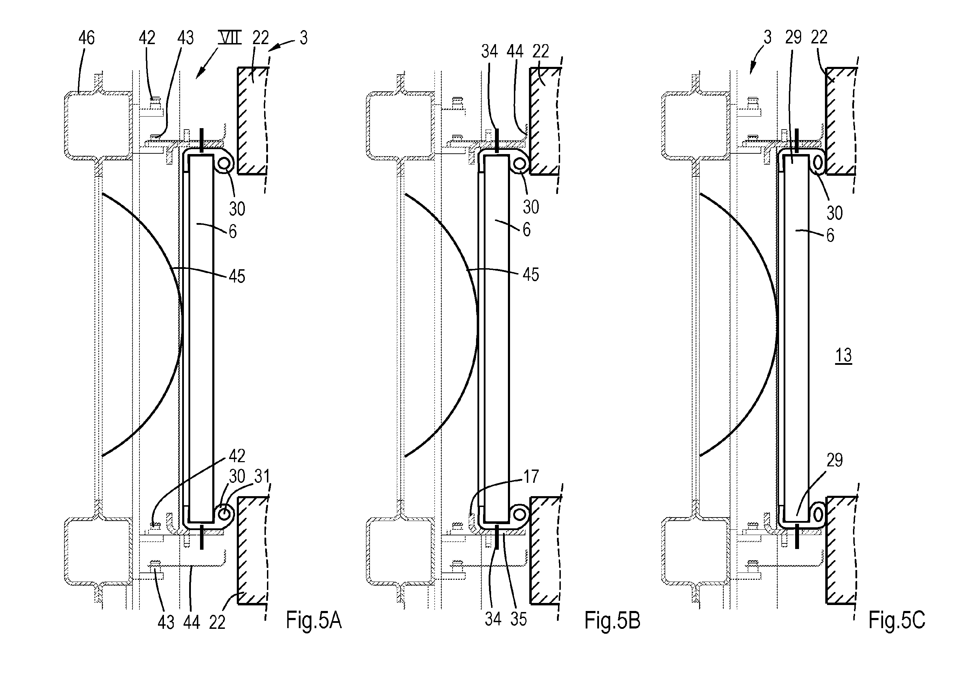

Figure 5 shows the displacement of the window 6 when contacting to the wall 22 via the sealing means in the form of the strap part 30, and the generation of a vacuum in the interior 13 of the vacuum cabinet 1. In figure 5A, the door 3 is near its closed position because at the remote door side of the window 6 the rubber elastic strap part 30 is near the wall 22. In figure 5B the rubber elastic part 30 contacts the wall 22. This results in a displacement of the window 6 to the left in figure 5B, against the force of a bracket spring 45 in the slot 35 and guided by the elongated blade 34. This changed position appears from the position of the blade 34 in the slot 35. In figure 5B, blade 34 is in the middle of the slot 35 of the window frame 17. This results in a reliable and good sealing contact between the strap part 30 and the wall 22. Generation of vacuum and pressure difference over the window 6 will result in a displacement and contraction of the door 3 onto the wall 22 resulting in a deformation of the part 30 and in particular of the cavity 29. The cavity 29 may flattened under high vacuum. The result is a displacement of the window 6 from the situation showing in figure 5B into the position shown in figure 5C. Opening of the door 3 will result in a reversal of the movements and attainment of the position shown in figure 5A.

Although the vacuum cabinet is described for only generating a vacuum, it will be apparent that when the vacuum cabinet is used as a baking oven than the vacuum cabinet is to be provided with heating means for generating baking temperatures at the interior. Furthermore, the vacuum cabinet may be provided with connections for a steam source, so that steam baking and steam cooling of baked food products may be possible.

## Claims

1. Vacuum cabinet, comprising a door connected by hinge means to a vacuum chamber for closing at least one chamber opening, which door comprises at least one window, wherein the window is connected by moving means to a door frame, the vacuum cabinet further comprising means for sealing the door over the chamber opening, and means for connecting the cabinet to a vacuum source, and optionally means for heating the vacuum chamber.

2. Vacuum cabinet according to claim 1, wherein the moving means comprise window rotation means.

3. Vacuum cabinet according to claim 1, or 2, wherein a window frame encloses the window, and preferably the window frame is connected via the rotation means to the door frame.

4. Vacuum cabinet according any of the claims 1-3, wherein the window moving means are releasable connected to the door frame.

5. Vacuum cabinet according to any of the claims 1-4, wherein the window is enclosed by a strap connected to the window frame, and the strap is having a rubber elastic strap part for sealing contact with the vacuum chamber.

6. Vacuum cabinet according to any of the claims 1-5, wherein the moving means comprise displacement means allowing the window to displace relative to the door frame and preferably the window strap is connected to the window frame via the displacement means allowing the window to displace in the window frame.

7. Vacuum cabinet according to claim 6, wherein the displacement means comprise at least one blade extending through a slot in the window frame and connected to the strap.

8. Vacuum cabinet according to any of the claims claim 6 or 7, comprising spring means urging the window towards the vacuum chamber.

9. Vacuum cabinet according to any of the claims 1-8, comprising several vacuum chamber compartments and at least two windows register with at least two compartments.

10. Vacuum cabinet according to any of the claims 1-9, comprising at least one outer cover window covering a door window, which cover window preferably is supported by a support plate.

11. Vacuum cabinet according to any of the claims 1-10, wherein the door is provided in at least its upper region with a ventilation opening.

12. Vacuum cabinet according to any of the claims 1-11, wherein the door comprises a safety bar.

13. Vacuum cabinet according to any of the claims 1-12, which is a vacuum baking oven comprising heating means, and preferably comprising means for connection to a steam source.

14. Vacuum cabinet according to claim 13, comprising means for controlling the steam supply via pressure control means.

15. Door for a vacuum cabinet according to any of the claims 1-14.
